# EUROPÄISCHE PATENTANMELDUNG

(11) **EP 2 474 649 A1**
(43) Veröffentlichungstag der Anmeldung: **11.07.2012**
(21) Anmeldenummer: 11150225.8
(22) Anmeldetag: 05.01.2011
(51) Int. Cl.: C23F 1/16, C23F 1/30, C23C 2/26

(54) **Verfahren zur Oberflächenbehandlung eines schutzbeschichteten Substrats**

(71) Anmelder: Voestalpine Stahl GmbH, 4020 Linz (AT)
(72) Erfinder: Hagler, Josef, DI, 4060 Leonding (AT); Haslinger, Harald, DI Dr., 4020 Linz (AT); Holzer, Edmund, 4614 Marchtrenk (AT); Luckeneder, Gerald, DI Dr., 4812 Pinsdorf (AT); Riener, Christian K., DI Dr., 4040 Linz (AT); Stellnberger, Karl-Heinz, Dr.-Ing., 4020 Linz (AT)
(74) Vertreter: Jell, Friedrich

(57) **Zusammenfassung**

Es wird ein Verfahren zur Oberflächenbehandlung eines schutzbeschichteten Substrats (1), insbesondere Stahlbands, zur Verbesserung der Adhäsionsfestigkeit mit einem Klebstoff (10) gezeigt, wobei die wenigstens teilweise mehrphasige Schutzschicht (2) mindestens Zink und Magnesium aufweist. Um eine besondere Klebeignung zu schaffen, wird vorgeschlagen, dass die Schutzschicht (2) einer Beizbehandlung, die auf wenigstens eine intermetallische Zn-Mg Phase (4) der Schutzschicht (2) im Wesentlichen gerichteten ist, mit saurer Beize, insbesondere Säure, unterworfen wird.

## Beschreibung

Die Erfindung betrifft ein Verfahren zur Oberflächenbehandlung eines schutzbeschichteten Substrats, insbesondere Stahlbands, zur Verbesserung der Adhäsionsfestigkeit mit einem Klebstoff, wobei die wenigstens teilweise mehrphasige Schutzschicht mindestens Zink und Magnesium aufweist.

Um die Klebeignung eines Stahlblechs, das mit einer Zink/Magnesiumschicht zum Korrosionsschutz beschichtet ist, zu verbessern, ist aus dem Stand der Technik ein Verfahren bekannt (DE102008004728A1), bei dem auf die Zink/Magnesiumschicht eine Phosphatierlösung aufgebracht wird. Damit soll auf der Schutzschicht eine feine Kristallstruktur zur Anbindung des Klebstoffs geschaffen werden. Nachteilig bei solch einem Verfahren ist, dass bei der Phosphatierung die Bildung von Zink(Magnesium)phosphatkristallen nicht ausgeschlossen werden kann, was die Gefahr des Reißens der Phosphatschicht bei Kraftbelastungen erhöht. Damit kann daher keine standfeste Verklebung gewährleistet werden.

Die Erfindung hat sich daher die Aufgabe gestellt, ausgehend vom eingangs geschilderten Stand der Technik ein Verfahren zu schaffen, mit dem nicht nur auf schnelle und kostengünstige Weise eine Oberfläche eines zumindest mit Zink und Magnesium schutzbeschichteten Substrats für eine Klebverbindung vorbereitet werden kann, sondern damit auch eine Verbesserung in der Klebeignung ermöglicht werden kann.

Die Erfindung löst die gestellte Aufgabe dadurch, dass die Schutzschicht einer Beizbehandlung, die auf wenigstens eine intermetallische Zn-Mg Phase der Schutzschicht im Wesentlichen gerichteten ist, mit saurer Beize unterworfen wird.

Wird die Schutzschicht einer Beizbehandlung, die auf wenigstens eine intermetallische Zn-Mg Phase der Schutzschicht im Wesentlichen gerichteten ist, mit saurer Beize unterworfen, dann kann eine Oberfläche einer mehrphasigen Schutzschicht mit Zink und Magnesium derart vorbereitet werden, dass damit eine besondere Adhäsionsfestigkeit mit einem Klebstoff entsteht. Es kann nämlich erfindungsgemäß damit nicht nur eine vergrößerte Oberfläche zur Klebstoffanbindung geschaffen, sondern auch die Reaktionsfläche der Schutzschicht verbessert werden. Dem Klebstoff stehen nämlich auf an den angebeizten Stellen der Schutzschicht vermehrt auftretende Metallhydroxide (zum Beispiel Zn-Hydroxide) für die Ausbildung der Verbindung zur Verfügung. Durch das selektive Anbeizen der fein verteilten intermetallischen Zn-Mg Phase (z.B. MgZn₂, Mg₂Zn₁₁, im binären und/oder ternären Eutektikum) kann nicht nur ein einfaches Verfahren zur Vorbereitung eines schutzbeschichteten Substrats für eine Klebverbindung geschaffen werden, sondern es kann auch eine Klebeignung deutlich verbessert werden. Das erfindungsgemäße Verfahren kann sich daher insbesondere dadurch auszeichnen, dass das schutzbeschichtete Substrat einer derartigen Beizbehandlung unterworfen wird, dass höchstens Anteile (insbesondere die intermetallische Zn-Mg Phase) wenigstens von der Oberfläche der mehrphasigen Schutzschicht entfernt werden und sich damit eine Oberflächenstruktur und Reaktionsfläche der Schutzschicht ausbildet, die für eine bessere Anbindung eines Klebstoffs an der Schutzschicht bzw. in weitere Folge am Substrat sorgen kann. Im Gegensatz zum Stand der Technik kann daher auch bei einem wenigstens mit Zink und Magnesium beschichteten Stahlband eine standfeste Verbindung mit einem Klebstoff sichergestellt werden. Insbesondere kann damit auch bei Schutzschichten, aufweisend Zink und Magnesium, bekannten Adhäsionsbrüche ausgeschlossen werden, so dass lediglich Kohäsionsbrüche in Kauf genommen werden müssen. Erfindungsgemäß kann damit auch ein solch behandeltes Substrat selbst bei Verklebungen im Automobilbau verwendbar werden.

Das Verfahren kann noch weiter vereinfacht werden, indem im Beizschritt zum selektiven Anbeizen der Schutzschicht auch eine Oxidschicht der Schutzschicht abgebeizt wird. In einem Verfahrensschritt kann erfindungsgemäß einerseits das schutzbeschichtete Substrat für sein selektives Anbeizen vorbereitet, als auch das selektive Anbeizen selbst durchgeführt werden. Es müssen lediglich eine saue Beize sowie eine diesbezügliche Beizdauer dieses Beizschritts derart ausgewählt werden, dass diese Bedingungen erfüllt werden können. Außerdem können durch die Verwendung lediglich eines Beizmittels die Verfahrenskosten vermindern werden.

Indem die Schutzschicht einer auf MgZn₂ im Wesentlichen gerichteten Beizbehandlung unterworfen wird, kann insbesondere unter Ausnützung der Sprödigkeit dieser Laves-Phase ein zielgerichtetes selektives Anbeizen der Schutzschicht ermöglicht werden, ohne damit eine wesentliche Beeinträchtigung anderer Mikrostrukturteile befürchten zu müssen. Das erfindungsgemäße Verfahren kann sich daher zusätzlich zur Verbesserung der Klebeignung des Substrats auch durch seinen vergleichsweise geringen Materialabtrag auszeichnen. Ein insbesondere auf das Eutektikum gerichtetes Anbeizen hat sich als besonders vorteilhaft zur Schaffung einer Nanotopographie an der Oberfläche des Substrats herausgestellt. Es kann nämlich entlang der oberflächennahen dendritischen Ausbildung des Eutektikums in die Tiefe der Schutzschicht eingedrungen werden. Dabei können binäres Eutektikum (Zn und MgZn₂) oder ternäres Eutektikum (Zn, Al und MgZn₂) der Mikrostruktur der Schutzschicht angebeizt werden, wobei hierfür das ternäre Eutektikum aufgrund seiner gegenüber dem binären Eutektikum feineren Struktur bevorzugt sein kann.

Vorteilhaft kann sich herausstellten, wenn die zusätzlich Aluminium aufweisende Schutzschicht einer auf ein Eutektikum im Wesentlichen gerichteten Beizbehandlung unterworfen wird. Damit kann nämlich gerade die feine Verteilung des insbesondere ternären Eutektikums genützt werden, um für eine besondere Oberflächenstruktur und Reaktionsfläche zur verbesserten Anbindung des Klebstoffs an der Schutzschicht zu sorgen.

Säure als Beize mit einem pKₛ Wert kleiner 0 kann sich insbesondere für das selektive Anbeizen der intermetallischen Zn-Mg Phase der Schutzschicht auszeichnen. Außerdem kann mit solch einer Säurestärke ein kontinuierliches Verfahren zur Oberflächenbehandlung sichergestellt werden, was insbesondere bei schutzbeschichteten Stahlbändern zu einer erheblichen Verfahrensverkürzung genützt werden kann. Im Allgemeinen wird noch erwähnt, dass sich der pKₛ Wert als der negative dekadische Logarithmus von Kₛ, der Säurekonstante, definieren ist.

Wird eine nicht-oxidierende Säure als saure Beize verwendet, kann sich das Verfahren insbesondere durch seine kurze Beizzeit und seinen selektiv auf die intermetallische Zn-Mg Phase gerichteten Beizangriff auszeichnen. Insbesondere H₂SO₄ als Säure kann sich dabei als vorteilhaft herausgestellt. Neben einer schnellen Oberflächenbehandlung kann damit auch eine Oberflächenstruktur geschaffen werden, die sich zumindest bereichsweise durch eine Nanotopographie kennzeichnet, was eine erhöhte Klebeignung ermöglichen kann.

Besondere Verfahrensverhältnisse können sich ergeben, wenn die Schutzschicht einer Beizdauer von 0,5 bis 20 Sekunden mit einer Säure mit einer Konzentration von 1 bis 20 Volumen% (bzw. von 1 bis 20 Volumenprozent) unterworfen wird.

Insbesondere verbesserte Verfahrensverhältnisse können sich ergeben, wenn die Schutzschicht einer Beizdauer von 1 bis 15 Sekunden mit einer Säure mit einer Konzentration von 2 bis 10 Volumen% unterworfen wird.

Liegt das Produkt, das sich aus Beizdauer in Sekunden und Konzentration in Volumen% ergibt, im Bereich von 1 bis 100, dann kann eine einfache Verfahrensvorschrift für den Beizangriff auf die intermetallische Zn-Mg Phase der Schutzschicht gegeben werden. Insbesondere kann damit auch die Oxidschicht der Schutzschicht auf einfache Weise mitentfernt werden.

Die Verfahrensvorschrift für den Beizangriff kann noch weiter verbessert werden, wenn das Produkt, das sich aus Beizdauer in Sekunden und Konzentration in Volumen% ergibt, im Bereich von 6 bis 75 liegt.

Insbesondere kann sich die Erfindung dadurch auszeichnen, dass eine Säure mit einem pKₛ Wert kleiner 0 zur Oberflächenbehandlung eines, mit einer mehrphasigen Schutzschicht, wenigstens Zink und Magnesium aufweisend, korrosionsgeschützten Gegenstands, insbesondere Stahlbands verwendet wird. Im Gegensatz zu bekannten Verfahren, bei denen Haftvermittler auf die Oberfläche aufgetragen oder bei denen eine Phosphatierung der Oberfläche durchgeführt wird, um die Klebeignung eines schutzbeschichteten Substrats zu erhöhen, kann die Verwendung einer Säure zur Oberflächenbehandlung ein schnelles Verfahren und eine hoch reaktive Oberfläche zur Klebstoffanbindung ermöglichen.

Vorteilhafte Verfahrensbedingungen können sich weiter ergeben, wenn die Säure für eine, auf das Eutektikum der zusätzlich Aluminium aufweisenden Schutzschicht im Wesentlichen gerichteten Beizbehandlung verwendet wird. Insbesondere die feine Verteilung des ternären Eutektikums kann sich zur Verbesserung der Oberflächenstruktur und der Reaktionsfläche für eine Verbindung mit einem Klebstoff auszeichnen.

Die Erfindung hat sich außerdem die Aufgabe gestellt, einen Gegenstand, insbesondere ein Stahlband, mit einer verbesserten Klebeignung für eine standfeste Verbindung zu schaffen.

Die Erfindung löst die gestellte Aufgabe hinsichtlich des Gegenstands dadurch, dass die Schutzschicht eine, um den Anteil an intermetallischer Zn-Mg Phase verringerte Mikrostruktur, hergestellt durch ein selektives Anbeizen der Schutzschicht, aufweist.

Weist die Schutzschicht eine, um den Anteil an intermetallischer Zn-Mg Phase verringerte Mikrostruktur auf, dann kann nicht nur eine besondere Oberflächenstruktur mit Nanotopographie zur Klebstoffanbindung ermöglicht werden, sondern diese Oberfläche kann sich zusätzlich durch eine verbesserte Reaktions- und Adsorptionsfläche für den Klebstoff auszeichnen. Im Gegensatz zum Stand der Technik kann somit einem Klebstoff eine Zn-Mg Oberfläche - ohne zusätzliche Maßnahmen - mit ausreichender Anbindungsfläche zur Verfügung gestellt werden, zumal gegenüber bekannten Zn-Mg Oberflächen auch eine verstärkte Hydroxid Ausprägung für eine verbesserte chemische Anbindung vorteilhaft genützt werden kann. Eine standfeste Verbindung mit einem Klebstoff, insbesondere eines Stahlbands mit einem Klebstoff, kann daher sichergestellt werden.

Einfache Konstruktionsverhältnisse und verbesserte Verbindungseigenschaften mit einem Klebstoff können sich ergeben, wenn die Schutzschicht eine um den MgZn₂Anteil verringerte Mikrostruktur aufweist.

Die Oberfläche des Gegenstands kann noch weiter verbessert für eine Klebstoffverbindung vorbereitet werden, wenn die zusätzlich Aluminium aufweisende Schutzschicht eine um den Anteil an Eutektikum verringerte Mikrostruktur aufweist. Insbesondere die Verringerung um das ternäre Eutektikum kann sich hierfür aufgrund seiner feinen Strukturierung bzw. Verteilung gegenüber dem binären Eutektikum auszeichnen.

In der Figur ist beispielsweise der Erfindungsgegenstand anhand eines Ausführungsbeispiels dargestellt. Es zeigen
- Fig. 1: einen Querschliff auf eine Mikrostruktur eines mit Zink-Magnesium beschichteten Stahlbands,
- Fig. 2: einen vergrößerten Querschliff auf das nach dem erfindungsgemäßen Verfahren behandelte Stahlband nach Fig. 1 und
- Fig. 3: eine Draufsicht auf das Stahlband nach Fig. 2.

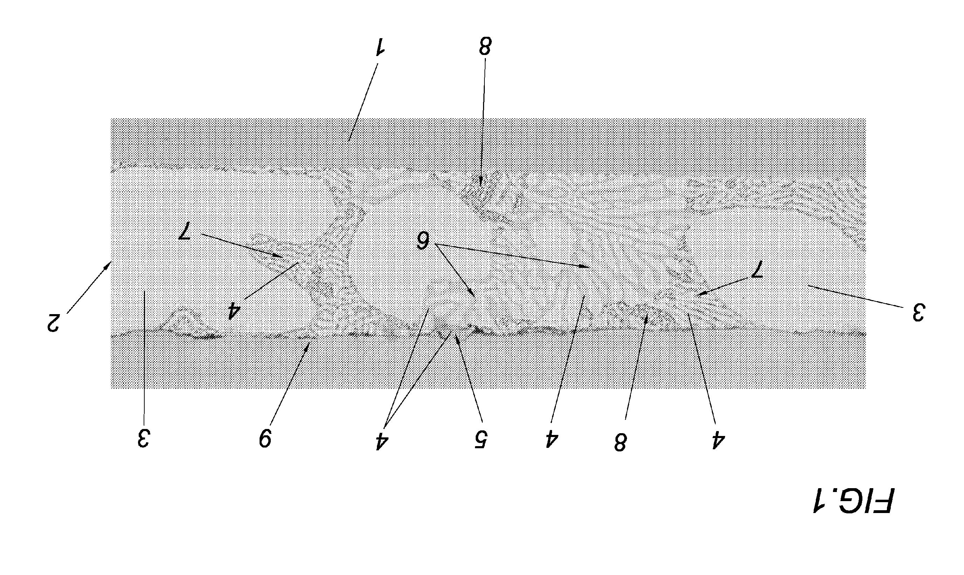

In Fig. 1 ist beispielsweise ein Schichtaufbau eines zum Korrosionsschutz mit wenigstens Zink-Magnesium beschichteten Stahlbands 1 im Querschliff gezeigt. Zum Aufbringen solch einer Schutzschicht 2 sind verschiedene Verfahren aus dem Stand der Technik bekannt, wobei sich bei diesen Verfahren aufgrund der geringen Mischbarkeit von Zink und Magnesium und der raschen Erstarrung der Schutzschicht ein mehrphasiger Überzug aus Zink 3 und intermetallischen Zn-Mg Phasen 4 ausbildet. Diese intermetallische Zn-Mg Phase 4 kann in unterschiedlicher Anordnung und Ausprägung vorliegen, nämlich als MgZn₂ Schicht 5, insbesondere schollenförmig ausgeprägt, auf der Oberfläche des Zn-Mg Überzug oder als Eutektikum 6, 7, was beispielsweise als binäres Eutektikum 6 (Zink und MgZn₂) oder ternäres Eutektikum 7 (Zink, Aluminium und MgZn₂) der Fall sein kann. Auch kann eine Aluminiumphase 8 bestehen. Die intermetallische Zn-Mg Phase 4 reicht bis zur Oberfläche der Schutzschicht 2, wobei die Schutzschicht 2 wenigstens teilweise eine Oxidschicht 9 ausbildet. Diese Oxidschicht 9 kann primär Mg-Oxid, Al-Oxid und Mg-Al Oxid und geringerem Anteil Zn-Oxid aufweisen.

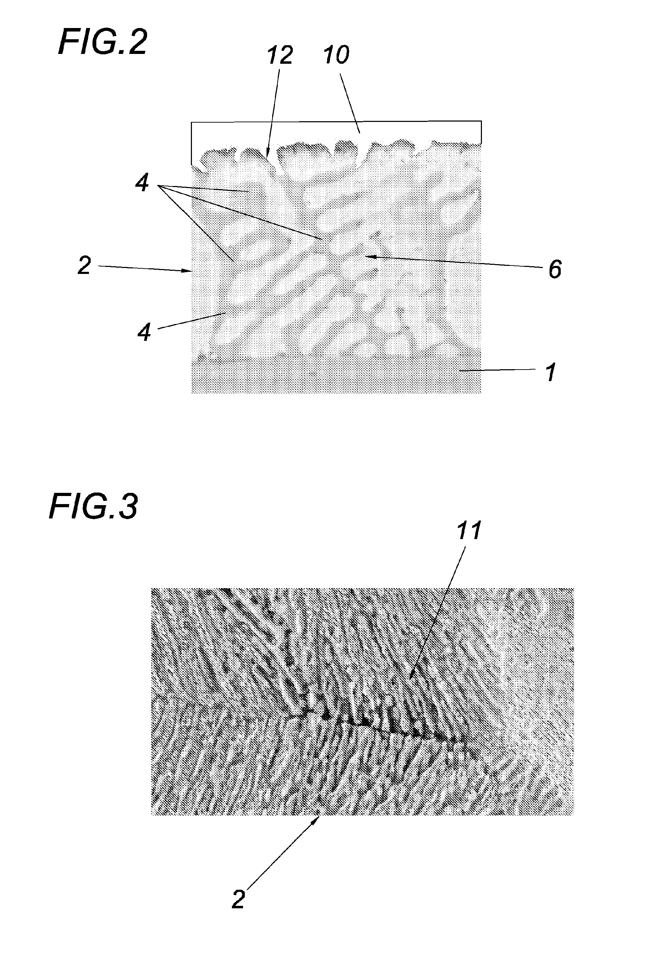

Anhand der Fig. 2 wird nun der technische Effekt des erfindungsgemäßen Beizverfahrens beispielsweise näher erläutert: Um die Adhäsionsfestigkeit zwischen dem Stahlband 1 und einem Klebstoff 10 zu verbessern, wird die Schutzschicht 2 einer auf wenigstens eine intermetallische Zn-Mg Phase 4 (MgZn₂) im Wesentlichen gerichteten Beizbehandlung mit einer sauren Beize unterworfen. Die intermetallische Zn-Mg Phase 4 wird daher im Vergleich zu anderen Teilen der Mikrostruktur der Schutzschicht 2 erhöht verringert, so dass sich durch dieses selektive Anbeizen der oberflächennahen Zn-Mg Phase 4 eine Nanotopographie 11 ausbilden kann, wie dies in der Fig. 3 als Draufsicht auf diese Schutzschicht 2 erkennbar wird. Auch ist in Fig. 3 die erhöhte Rauheit der Oberfläche der Schutzschicht 2 erkennbar. Insbesondere hat sich als vorteilhaft für solch einen selektiven Beizangriff eine Säure mit einem pKₛ Wert kleiner 0 herausgestellt, weil damit selbst in einem Schritt auch die Oxidschicht 9 (Heißoxide und/oder Kaltoxide, welche Kaltoxide beispielsweise bei einem Nachwalzen der Oberfläche vor dem Beizangriff entstehen können) abgebeizt werden kann. So ist in den Figuren 2 und 3 nachvollziehbar, dass im Bereich der verminderten Mikrostruktur der Schutzschicht 2 auch die ursprüngliche Oxidschicht 9 entfernt wurde. Vorteilhaft bilden sich in diesen selektiv gebeizten Bereichen der Schutzschicht 2 auch vermehrt Metallhydroxide 12, beispielsweise Zn- und Mg-Hydroxide, aus, wodurch eine verbesserte chemische Bindung zusätzlich zu den Van-der-Waals-Bindungen zwischen der Schutzschicht 2 bzw. dem Stahlband 1 und dem Klebstoff 10 ermöglicht werden kann.

Da MgZn₂ sowohl als Schicht 5 als auch im Eutektikum 6, 7 vorhanden ist, bietet es sich für ein einfaches Verfahren zur selektiven Verringerung der Schutzschicht 2 sowie zur Bildung von Zn- und Mg-Hydroxide 12 an, die Schutzschicht einer auf MgZn₂ gerichteten Beizbehandlung zu unterwerfen. Insbesondere können damit auch die Eutektika 6, 7 vermindert werden, die aufgrund der feinen MgZn₂ Verteilung ein Relief in Nanogröße für eine verbesserte Klebeignung bilden können.

Für diesen Beizangriff auf das Stahlband 1 hat sich beispielsweise als Säure H₂SO₄ mit einer Konzentration von 2 bis 10 Volumen% und eine Beizdauer von 1 bis 15 Sekunden als vorteilhaft herausgestellt.

Beispielsweise wird anhand von in der Tabelle 1 zusammengefassten Ausführungsbeispielen der erfindungsgemäße Effekt näher beschrieben: Ein Gegenstand bzw. ein Stahlband 1 wird mit einer Schmelztauchverzinkungstechnologie mit einer Zusammensetzung, aufweisend Zink, 2 Gew.-% (bzw. 2 Gewichtsprozent) Aluminium und 2 Gew.-% Magnesium, beschichtet. Auf dem Stahlband 1 bildet sich eine mehrphasige Schutzschicht 2 aus, wie bereits in der Figuren 1 näher erläutert.

**Tabelle 1**

| **Säure** | **pKs - Wert** | **Beizzeit [s]** | **Konzentration [Volumen%]** | **Produkt [s*Volumen%]** |
|---|---|---|---|---|
| HCl | -6 | 3 | 5 | 15 |
| HCl | -6 | 5 | 5 | 25 |
| HCl | -6 | 10 | 5 | 50 |
| HCl | -6 | 15 | 5 | 75 |
| HNO3 | -1,32 | 3 | 5 | 15 |
| H2SO4 | -3 | 10 | 1 | 10 |
| H2SO4 | -3 | 15 | 1 | 15 |
| H2SO4 | -3 | 3 | 2,5 | 8 |
| H2SO4 | -3 | 5 | 2,5 | 13 |
| H2SO4 | -3 | 10 | 2,5 | 25 |
| H2SO4 | -3 | 15 | 2,5 | 38 |
| H2SO4 | -3 | 3 | 5 | 15 |
| H2SO4 | -3 | 5 | 5 | 25 |
| H2SO4 | -3 | 10 | 5 | 50 |
| H2SO4 | -3 | 15 | 5 | 75 |

Zunächst wurde ein vorbeschriebenes Stahlband 1 einer nicht-oxidierenden Säure HCl mit einer pKₛ Wert von -6, einer Konzentration von 5 Volumen% und je einer unterschiedlichen Beizdauer von 3, 5, 10 und 15 Sekunden unterworfen. Die Ergebnisse zeigten hervorragende Oberflächenstruktur und Reaktionsfläche der Schutzschicht 2 zur Anbindung an einen Klebstoff 10. Außerdem konnte damit die Oxidschicht 9 der Schutzschicht 2 mitentfernt werden. Eine Erhöhung der Beizdauer bzw. eine verminderte Beizdauer konnten keine wesentlichen Verbesserungen aufzeigen. Das Produkt aus Beizdauer in Sekunden und Konzentration in Volumen% (Produkt=Beizdauer*Konzentration) liegt gemäß Tabelle 1 im Bereich zwischen 15 und 75.

Beim nächsten Versuch wurde ein Stahlband 1 einer oxidierende Säure HNO₃ mit einer pKₛ Wert von -1,23, einer Konzentration von 5 Volumen% und je einer Beizdauer von 3 Sekunden unterworfen. Zum vorhergehenden Versuch konnten damit vergleichbare gute Ergebnisse erreicht werden, wobei sich hier ein Produkt aus Beizdauer in Sekunden und Konzentration in Volumen% von 15 einstellte.

In einem abschließenden weiteren Versuch wurde solch ein Stahlband 1 einer Säure H₂SO₄ mit einer pKₛ Wert von -3 in unterschiedlichen Konzentrationen in Volumen% unterworfen, nämlich 1, 2.5 und 5 Volumen%. Deutlich erkennbar in Tabelle 1 ist der Zusammenhang zwischen Konzentration in Volumen% und Beizdauer in Sekunden. Ab einer Konzentration von 2,5 Volumen% konnte eine deutliche Verringerung der Beizdauer auf 2 bzw. 5 Sekunden erkannt werden. Generell konnte eine Beizdauer von 3 bis 15 Sekunden hervorragende Ergebnisse zeigen, wobei sich in diesem Versuch ein Produkt aus Beizdauer in Sekunden und Konzentration in Volumen% von 8 bis 75 einstellte.

Erfindungsgemäß konnte daher festgestellt werden, dass das schutzbeschichtete Substrat 1 bei einer Beizbehandlung mit abgestimmten Parametern hinsichtlich Stoffmengenkonzentration und Beizdauer besonderen Ergebnissen in einer Verbesserung der Verbindung des Klebstoffs 10 mit der Schutzschicht 2 ermöglichen kann.

## Patentansprüche

1. Verfahren zur Oberflächenbehandlung eines schutzbeschichteten Substrats (1), insbesondere Stahlbands, zur Verbesserung der Adhäsionsfestigkeit mit einem Klebstoff (10), wobei die wenigstens teilweise mehrphasige Schutzschicht (2) mindestens Zink und Magnesium aufweist, **dadurch gekennzeichnet, dass** die Schutzschicht (2) einer Beizbehandlung, die auf wenigstens eine intermetallische Zn-Mg Phase (4) der Schutzschicht (2) im Wesentlichen gerichteten ist, mit saurer Beize, insbesondere Säure, unterworfen wird.

2. Verfahren nach Anspruch 1, **dadurch gekennzeichnet, dass** im Beizschritt zum selektiven Anbeizen der Schutzschicht (2) auch eine Oxidschicht (9) der Schutzschicht (2) abgebeizt wird.

3. Verfahren nach Anspruch 1 oder 2, **dadurch gekennzeichnet, dass** die Schutzschicht (2) einer auf MgZn₂ im Wesentlichen gerichteten Beizbehandlung unterworfen wird.

4. Verfahren nach Anspruch 1, 2 oder 3, **dadurch gekennzeichnet, dass** die zusätzlich Aluminium aufweisende Schutzschicht (2) einer auf ein insbesondere ternäres Eutektikum (7) im Wesentlichen gerichteten Beizbehandlung unterworfen wird.

5. Verfahren nach einem der Ansprüche 1 bis 4, **dadurch gekennzeichnet, dass** als saure Beize eine Säure mit einem pKₛ Wert kleiner 0 verwendet wird.

6. Verfahren nach Anspruch 5, **dadurch gekennzeichnet, dass** eine nicht-oxidierende Säure, insbesondere H₂SO₄, als saure Beize verwendet wird.

7. Verfahren nach einem der Ansprüche 1 bis 6, **dadurch gekennzeichnet, dass** die Schutzschicht (2) einer Beizdauer von 0,5 bis 20 Sekunden mit einer Säure mit einer Konzentration von 1 bis 20 Volumen% unterworfen wird.

8. Verfahren nach einem der Ansprüche 1 bis 7, **dadurch gekennzeichnet, dass** die Schutzschicht (2) einer Beizdauer von 1 bis 15 Sekunden mit einer Säure mit einer Konzentration von 2 bis 10 Volumen% unterworfen wird.

9. Verfahren nach einem der Ansprüche 1 bis 8, **dadurch gekennzeichnet, dass** das Produkt, das sich aus Beizdauer in Sekunden und Konzentration in Volumen% ergibt, im Bereich von 1 bis 100 liegt.

10. Verfahren nach einem der Ansprüche 1 bis 9, **dadurch gekennzeichnet, dass** das Produkt, das sich aus Beizdauer in Sekunden und Konzentration in Volumen% ergibt, im Bereich von 6 bis 75 liegt.

11. Verwendung einer Säure mit einem pKₛ Wert kleiner 0 zur Oberflächenbehandlung eines mit einer mehrphasigen Schutzschicht (2), aufweisend Zink und Magnesium, korrosionsgeschützten Gegenstands, insbesondere Stahlbands (1).

12. Verwendung nach Anspruch 11, **dadurch gekennzeichnet, dass** die Säure für eine, auf das insbesondere ternäre Eutektikum (7) der zusätzlich Aluminium aufweisenden Schutzschicht (2) im Wesentlichen gerichteten Beizbehandlung verwendet wird.

13. Gegenstand, insbesondere Stahlband (1), mit einer mehrphasigen Schutzschicht (2), aufweisend Zink und Magnesium, **dadurch gekennzeichnet, dass** die Schutzschicht (2) eine um den Anteil an intermetallischer Zn-Mg Phase (4) verringerte Mikrostruktur, hergestellt durch ein Verfahren zur Oberflächenbehandlung nach einem der Ansprüche 1 bis 10, aufweist.

14. Gegenstand nach Anspruch 13, **dadurch gekennzeichnet, dass** die Schutzschicht (2) eine um den MgZn₂ Anteil verringerte Mikrostruktur aufweist.

15. Gegenstand nach Anspruch 13 oder 14, **dadurch gekennzeichnet, dass** die zusätzlich Aluminium aufweisende Schutzschicht (2) eine um den Anteil an insbesondere ternärem Eutektikum (7) verringerte Mikrostruktur aufweist.
